# EUROPEAN PATENT APPLICATION

(11) **EP 2 665 250 A1**
(43) Date of publication of application: **20.11.2013**
(21) Application number: 12196993.5
(22) Date of filing: 13.12.2012
(51) Int. Cl.: H04N 5/225, H04N 5/232

(54) **Imaging apparatus and method of manufacturing the same**

(30) Priority: 15.05.2012 KR 20120051653
(71) Applicant: Samsung Electronics Co., Ltd., Gyeonggi-do 443-742 (KR)
(72) Inventor: Ryu, Hun-young, Korea (KR); Kim, Hong-ju, Korea (KR)
(74) Representative: Misselbrook, Paul

(57) **Abstract**

An imaging apparatus includes an imaging device, a support plate that supports the imaging device, a main body that supports the support plate to adjust a position of the support plate, and a posture sensor that is disposed on the support plate and senses a change in a posture of the main body.

## Description

### CROSS-REFERENCE TO RELATED PATENT APPLICATION

This application claims the priority benefit of Korean Patent Application No. 10-2012-0051653, filed on May 15, 2012, in the Korean Intellectual Property Office, the disclosure of which is incorporated herein in its entirety by reference.

### BACKGROUND

Various embodiments relate to an imaging apparatus and a method of manufacturing the same, and more particularly, to an imaging apparatus and a method of manufacturing the imaging apparatus which may precisely adjust a position of a sensor and conveniently perform an assembling process.

As the technologies for manufacturing electronic components have improved, thin and small imaging apparatuses such as digital cameras and digital camcorders have been manufactured. Various types of sensors are mounted on compact imaging apparatuses to perform various functions. However, as thinner and smaller imaging apparatuses have been developed, it has become more difficult to perform an assembling process of precisely mounting a sensor.

Japanese Patent Application Publication No. 2011-259072 discloses an imaging apparatus including an acceleration sensor. In general, since an imaging device and an acceleration sensor of an imaging apparatus are provided on independent mechanical elements, it is necessary to precisely adjust a position of the acceleration sensor relative to a main body of the imaging apparatus when the acceleration sensor is assembled into the imaging apparatus.

However, since a mechanical tolerance exists between mechanical elements of the imaging apparatus, it is difficult and time consuming to adjust the position of the acceleration sensor. Also, since not only a process of adjusting the acceleration sensor relative to the main body of the imaging apparatus but also a process of adjusting the imaging device need to be performed, it is time consuming and difficult to precisely adjust both the acceleration sensor and the imaging device.

### SUMMARY

Various embodiments provide an imaging apparatus and a method of manufacturing the same whereby a position of a posture sensor may be easily and precisely adjusted.

Various embodiments also provide an imaging apparatus and a method of manufacturing the same whereby a process of adjusting a position of a posture sensor may be performed by performing a process of adjusting a position of an imaging device.

Various embodiments also provide an imaging apparatus and a method of manufacturing the same whereby an assembling process may be easily performed.

According to an embodiment, there is provided an imaging apparatus including: an imaging device; a support plate that supports the imaging device; a main body that supports the support plate to adjust a position of the support plate; and a posture sensor that is disposed on the support plate and senses a change in a posture of the main body.

The imaging apparatus may further include position adjusting units that adjust the position of the support plate relative to the main body.

The position adjusting units may include a plurality of adjusting screws that are respectively inserted into a plurality of coupling holes formed in the support plate, wherein lengths of portions of the plurality of adjusting screws passing through the plurality of coupling holes and protruding from the support plate are adjusted.

End portions of the plurality of adjusting screws protruding from the support plate may be supported by the main body.

The imaging apparatus may further include a main circuit board that is mounted on the main body, wherein end portions of the plurality of adjusting screws protruding from the support plate are supported by the main circuit board.

The position of the support plate relative to the main body may be adjusted by rotating the support plate relative to the main body plate in a first direction, rotating the support plate relative to the main body in a second direction that intersects the first direction, or moving the support plate toward or away from the main body.

The imaging apparatus may further include a fixing member that fixes the support plate to the main body.

The support plate may be fixed to the main body by using an adhesive.

The support plate may include an electrical circuit pattern that is electrically connected to the imaging device and the posture sensor.

The imaging apparatus may further include a main circuit board that is mounted on the main body and is electrically connected to the support plate.

The main circuit board may be disposed to face a surface of the support plate opposite to a surface of the support plate on which the imaging device is disposed.

The main circuit board may be disposed to be spaced apart from a side surface of the support plate.

The imaging apparatus may further include a flexible circuit board that is electrically connected to the imaging device and the posture sensor, wherein the imaging device and the posture sensor are coupled to the support plate via the flexible circuit board.

The posture sensor may be one selected from the group consisting of an acceleration sensor for sensing a change in acceleration due to a movement of the main body, an angular velocity sensor for sensing a change in angular velocity, and a combination of an acceleration sensor and an angular velocity sensor.

According to another embodiment, there is provided a method of manufacturing an imaging apparatus, the method including: disposing an imaging device on a support plate; disposing a posture sensor on the support plate; disposing the support plate on a main body; and adjusting a position of the support plate relative to the main body.

The method may further include, after the adjusting of the position of the support plate relative to the main body, fixing the support plate to the main body.

The fixing of the support plate may include fixing the support plate to the main body by using an adhesive.

The fixing of the support plate may include fixing the support plate to the main body by using a fixing member.

The method may further include, after the fixing of the support plate to the main body, obtaining a signal about a reference surface from the posture sensor and compensating for a positional difference between the posture sensor and the imaging device.

The adjusting of the position of the support plate relative to the main body may include adjusting the position of the support plate by rotating the support plate relative to the main body in a first direction, rotating the support plate relative to the main body in a second direction that intersects the first direction, or moving the support plate toward or away from the main body.

### BRIEF DESCRIPTION OF THE DRAWINGS

The above and other features and advantages will become more apparent by describing in detail exemplary embodiments thereof with reference to the attached drawings in which:
FIG. 1 is a perspective view illustrating an imaging apparatus, according to an embodiment;
FIG. 2 is a partial perspective view illustrating the imaging apparatus of FIG. 1;
FIG. 3 is a cross-sectional view illustrating the imaging apparatus of FIG. 1;
FIG. 4 is a block diagram for explaining a relationship between elements of the imaging apparatus of FIG. 1;
FIG. 5 is a perspective view for explaining a photographing operation of the imaging apparatus of FIG. 1;
FIG. 6 is a partial exploded perspective view illustrating an imaging apparatus, according to another embodiment;
FIG. 7 is a cross-sectional view illustrating an imaging apparatus, according to another embodiment; and
FIG. 8 is a flowchart illustrating a method of manufacturing an imaging apparatus, according to an embodiment.

### DETAILED DESCRIPTION

As used herein, the term "and/or" includes any and all combinations of one or more of the associated listed items.

Various embodiments of the invention will now be described more fully with reference to the accompanying drawings, in which exemplary embodiments are shown.

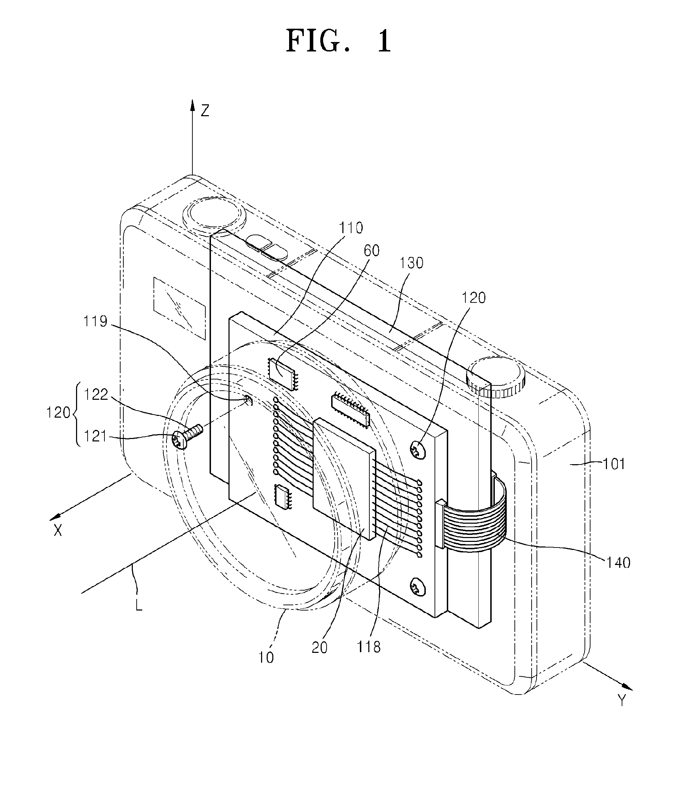

FIG. 1 is a perspective view illustrating an imaging apparatus, according to an embodiment.

Referring to FIG. 1, the imaging apparatus includes an imaging device 20, a support plate 110 that supports the imaging device 20, a main body 101 that supports the support plate 110 to adjust a position of the support plate 110, and a posture sensor 60 that is disposed on the support plate 110 and senses a change in a posture of the main body 101.

Although the imaging apparatus of FIG. 1 is a digital camera, the present embodiment is not limited thereto. That is, the imaging apparatus may be any of various devices such as a digital camcorder, a mobile phone including a camera, a smart phone, a mobile media player including a camera, and a tablet computer.

When an image of a subject passes through a barrel 10 and is incident on the imaging device 20, the imaging device 20 may convert the image of the subject into an electrical signal. In order to accurately form the image of the subject on the imaging device 20, the imaging device 20 has to be accurately aligned with an optical axis L of the barrel 10.

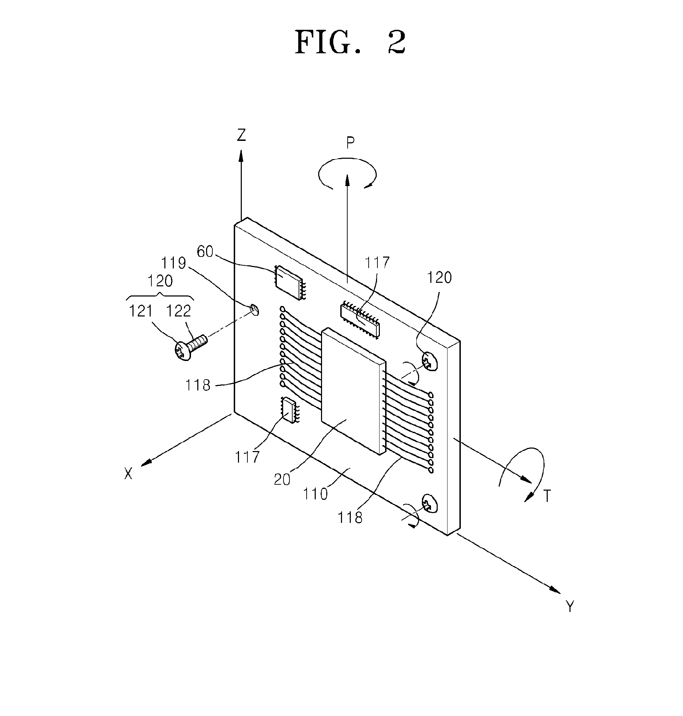

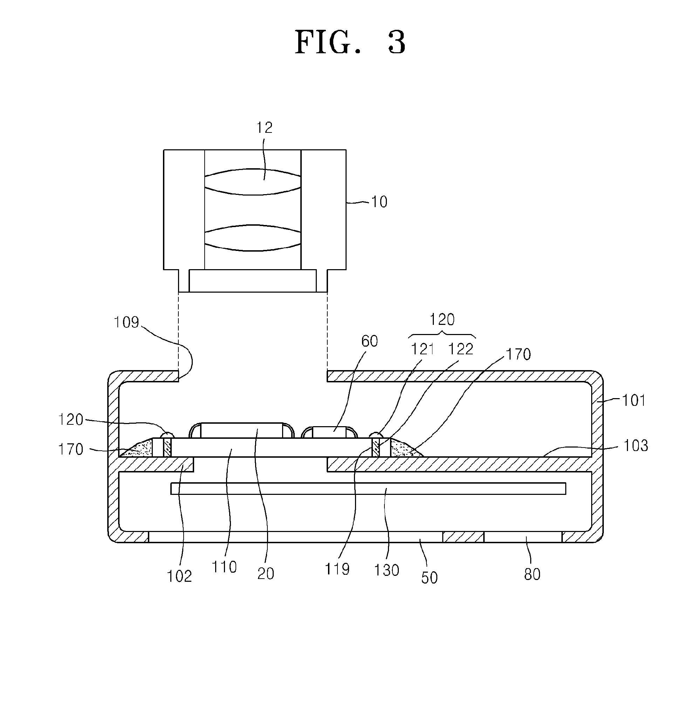

FIG. 2 is a partial perspective view illustrating the imaging apparatus of FIG. 1. FIG. 3 is a cross-sectional view illustrating the imaging apparatus of FIG. 1.

The support plate 110 that supports the imaging device 20 is disposed such that a position of the support plate 110 relative to the main body 101 may be adjusted. That is, when elements of the imaging apparatus are assembled, a position of the support plate 110 relative to the main body 101 in X, Y, and Z-axes may be adjusted.

Position adjusting units 120 for adjusting a position of the support plate 110 relative to the main body 101 are provided between the support plate 110 and the main body 101. The position adjusting units 120 include adjusting screws 122 that are inserted into a plurality of coupling holes 119 formed in the support plate 110, and head portions 121 that are coupled to end portions of the adjusting screws 122.

Since screw surfaces corresponding to the adjusting screws 122 are formed on inner walls of the coupling holes 119 of the support plate 110, the adjusting screws 122 may be screwed into the coupling holes 119 of the support plate 110. As an operator rotates the head portions 121 during an assembling process, lengths of portions of the adjusting screws 122 passing through the coupling holes 119 and protruding from the support plate 110 may be adjusted.

Referring to FIG. 3, the support plate 110 is supported by chassis 102 and 103 that protrude into the main body 101. End portions of the adjusting screws 122 passing through the coupling holes 119 of the support plate 110 are supported by the chassis 102 and 103. However, a structure in which a position of the support plate 110 relative to the main body 101 may be adjusted is not limited thereto.

For example, by modifying the structure in FIG. 3, a main circuit board 130 may be fixed to the chassis 102 and 103 of the main body 101, the support plate 110 may be disposed on the main circuit board 130, and the end portions of the adjusting screws 122 passing through the support plate 110 may be supported by the main circuit board 130.

Three position adjusting units 120 are provided. As the adjusting screws 122 of the three position adjusting units 120 are adjusted, positions of portions of the support plate 110 corresponding to the adjusting screws 122 which are spaced apart from the chassis 102 and 103 may be changed. Accordingly, by combining adjusted positions of the three position adjusting units 120, the support plate 110 may be rotated in a panning direction (a P-axis direction), the support plate 110 may be rotated in a tilting direction (a T-axis direction), or a position in an X-axis direction may be adjusted.

The number or positions of the position adjusting units are not limited thereto, and the a various number of, for example, 4, 5, or 6, position adjusting units 120 may be provided.

A position of the support plate 110 relative to an optical axis L of the imaging device 20 may be precisely adjusted by adjusting a position of the support plate 110 relative to the main body 101 by using the position adjusting units 120. For example, the support plate 110 may be precisely adjusted such that the amount of the support plate 110 tilted with respect to the optical axis L is about 10 pm.

The posture sensor 60 for sensing a change in a posture of the main body 101 is disposed on the support plate 110. The posture sensor 60 may be embodied as an acceleration sensor for sensing a change in acceleration due to a movement of the main body 101, an angular velocity sensor for sensing a change in an angular velocity due to a movement of the main body 101, or a combination of an acceleration sensor and an angular velocity sensor.

Since the posture sensor 60 as well as the imaging device 20 is disposed on the support plate 110, a position of the posture sensor 60 relative to the main body 101 may be adjusted by performing a process of adjusting a position of the imaging device 20 relative to the main body 101. As described above, since the imaging device 20 is precisely adjusted such that the amount of the imaging device 20 tilted with respect to the optical axis L and the main body 101 is about 10 µm, the posture sensor 60 may also be precisely adjusted relative to the main body 101.

By disposing the posture sensor 60 at a predetermined position on the support plate 110, a position of the posture sensor 60 relative to the main body 101 may also be completely adjusted.

In general, a positioning precision of the posture sensor 60 relative to the main body 101 may be within a range of a positioning precision of the imaging device 20. Even when a slight mechanical tolerance exists between the support plate 110 and the posture sensor 60, the mechanical tolerance may be reduced by performing position adjustment on the imaging device 20 with high precision.

If the posture sensor 60 is a cheap one, the posture sensor 60 may deviate greatly. Such a deviation may be controlled by a control unit (not shown) to offset a signal value of the posture sensor 60 relative to the main body 101 after a position of the imaging device 20 is adjusted. That is, after a position of the support plate 110 is adjusted, the imaging apparatus is placed on a surface horizontal to a gravity direction as a reference surface and a signal value of the posture sensor 60 is obtained. By setting the signal value of the posture sensor 60 output with respect to the reference surface as a reference value, the deviation of the posture sensor 60 may be corrected.

If the posture sensor 60 is disposed on the main circuit board 130 like in a conventional method, a process of adjusting a position of the posture sensor 60 relative to the main body 101 needs to be additionally performed. However, in the present embodiment, since both the posture sensor 60 and the imaging device 20 are disposed on the support plate 110, a process of adjusting a position of the posture sensor 60 relative to the main body 101 may also be completed by performing a process of adjusting a position of the imaging device 20.

Once the process of adjusting the position of the support plate 110 relative to the main body 101 is completed, the support plate 110 may be fixed to the chassis 102 and 103 of the main body 101 by using an adhesive 170. The adhesive 170 may be, for example, an ultraviolet curable resin or a thermosetting resin.

However, a method of fixing the support plate 110 to the main body 101 is not limited thereto. For example, the support plate 110 may be fixed to the main body 101 by using a fixing member (not shown) such as bolts and nuts, rivets, or clips.

The support plate 110 may include a circuit pattern 118 that is electrically connected to the imaging device 20 and the posture sensor 60. Also, the support plate 110 may include a semiconductor chip 117 having a function other than functions of the imaging device 20 and the posture sensor 60. As such, although the support plate 110 includes the circuit pattern 118 and is embodied as a rigid printed circuit board (PCB) including the imaging device 20, the posture sensor 60, and the semiconductor chip 117, the present embodiment is not limited thereto.

The main circuit board 130 may be disposed in the main body 101. The main circuit board 130 is electrically connected to the support plate 110 by using a flexible circuit board 140, and the main circuit board 130 transmits or receives a signal to or from elements such as a display unit 50, a user input unit 80 such as buttons (not shown), the imaging device 20, and the posture sensor 60, and controls other elements.

A mount portion 109 may be formed on a front portion of the main body 101 corresponding to the imaging device 20, and the barrel 10 including lenses 12 may be detachably mounted on the mount portion 109. A method of coupling the barrel 10 to the main body 101 is not limited thereto, and the barrel 10 may be fixed to the main body 101.

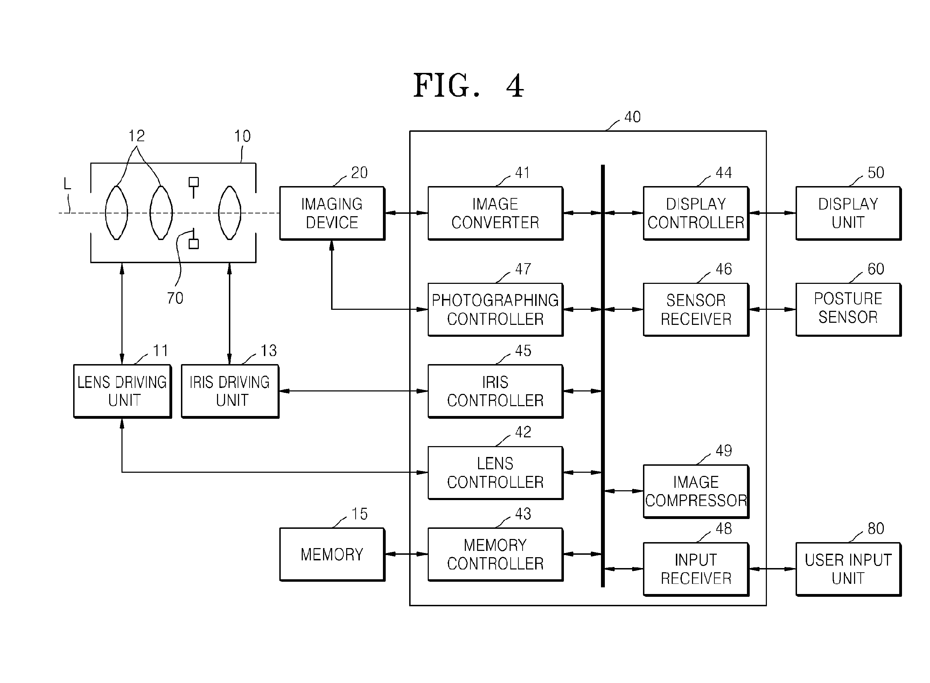

FIG. 4 is a block diagram for explaining a relationship between elements of the imaging apparatus of FIG. 1.

Referring to FIG. 4, since the imaging apparatus includes the imaging device 20 and the posture sensor 60, a photographing operation of the imaging device 20 may be variously controlled based on a signal received from the posture sensor 60.

The imaging device 20 obtains an image of a subject and converts the image into an electrical signal, and an image converter 41 of a control unit 40 converts the electrical signal generated by the imaging device 20 into image data. A photographing controller 47 of the control unit 40 controls the imaging device 20 to perform a photographing operation.

The barrel 10 is disposed in front of the imaging device 20. The barrel 10 includes a plurality of lenses 12 and an iris 70, and allows external image light to reach an imaging surface of the imaging device 20. The lenses 12 are disposed such that intervals between the lenses 12 may be changed. When the intervals between the lenses 12 are changed, a zoom ratio or focus may be adjusted.

The iris 70 which is controlled by an iris driving unit 13 adjusts the amount of light incident on the imaging device 20.

The lenses 12 are arranged along an optical axis L connecting the centers of the lenses 12. Since the lenses 12 are driven by a lens driving unit 11 including a driving member such as a zoom motor (not shown), positions of the lenses 12 relative to one another may be changed. The lenses 12 may include a zoom lens for magnifying or minifying an image of a subject, and a focus lens for adjusting focus on the subject. The lens driving unit 11 receives a control signal from a lens controller 42 of the control unit 40 and controls positions of the lenses 12 so that the lenses 12 may have one of a plurality of magnifying powers.

The imaging device 20 includes a photoelectric transformation device such as a charge-coupled device (CCD) or a complementary metal oxide semiconductor (CMOS), and converts image light incident through the lenses 12 and the iris 70 into an electrical signal. The imaging device 20 is driven by a control signal applied from the photographing controller 47.

The image converter 41 image processes the electrical signal of the imaging device 20, or converts the electrical signal into image data that may be stored in a storage medium such as a memory 15. For example, after the image converter 41 converts the electrical signal of the imaging device 20 into RGB data, the image converter 41 may convert the RGB data into raw data such as a YUV signal including a luminance component Y and chrominance components UV.

Also, a process of converting the electrical signal of the imaging device 20 by using the image converter 41 may include, for example, a step of reducing noise included in the electrical signal of the imaging device 20 by using a correlated double sampling (CDS) circuit, a step of adjusting a gain of a signal by using an automatic gain control (AGC) circuit after the noise is reduced, a step of converting an analog signal into a digital signal by using an A/D converter, and a step of performing signal processing, such as defective pixel correction, gain control, white balance, or gamma correction, on the digital signal. The CDS circuit, the AGC circuit, or the A/D converter may be configured as a separate circuit.

The control unit 40 is electrically connected to the imaging device 20, the lens driving unit 11, the iris driving unit 13, the memory 15, the display unit 50, the posture sensor 60, and the user input unit 80, and transmits or receives a control signal to or from the elements listed above to control operations of the elements or processes data.

The control unit 40 includes the image converter 41, the lens controller 42, a memory controller 43, a display controller 44, an iris controller 45, a sensor receiver 46, the photographing controller 47, an input receiver 48, and an image compressor 49.

The control unit 40 may be embodied as a microchip or a circuit board including a microchip. Elements included in the control unit 40 may be embodied as software or circuits embedded in the control unit 40. For example, the control unit 40 may be embodied as the main circuit board 130 of FIGS. 1 through 3.

The memory controller 43 controls data to be written to the memory 15, and written data or set information to be read from the memory 15.

The memory 15 may be a volatile internal memory and may include, for example, a semiconductor memory device such as a synchronous dynamic random access memory (SDRAM). The memory 15 may function as a buffer memory to temporarily store the image data generated by the image converter 41 and function as a working memory to process data.

Also, the memory 15 may be a non-volatile external memory and may be, for example, a flash memory such as a secure digital/multimedia card (SD/MMC) or a memory stick, a storage device such as a hard disc drive (HDD), or an optical storage device such as a digital versatile disc (DVD) or a compact disc (CD). In this case, the image data compressed in a file format such as joint photographic experts group (JPEG), tagged image file format (TIF), graphics interchange format (GIF), or personal computer exchange (PCX) by the image compressor 49 may be stored in the memory 15.

The imaging apparatus may include the display unit 50 that displays an image of the image data. The display unit 50 may be embodied as a touchscreen that senses a location of a touch on a surface by using a display device such as a liquid crystal display (LCD) or an organic light-emitting display (OLED) and generates a signal corresponding to the location of the touch.

A signal of the posture sensor 60 that senses a posture of the main body due to a movement of the main body 101 of the imaging apparatus (see FIGS. 1 through 3) is transmitted to the control unit 40 through the sensor receiver 46.

The user input unit 80 generates a user input signal according to a user's manipulation, and the user input signal of the user input unit 80 is transmitted to the input receiver 48 of the control unit 40.

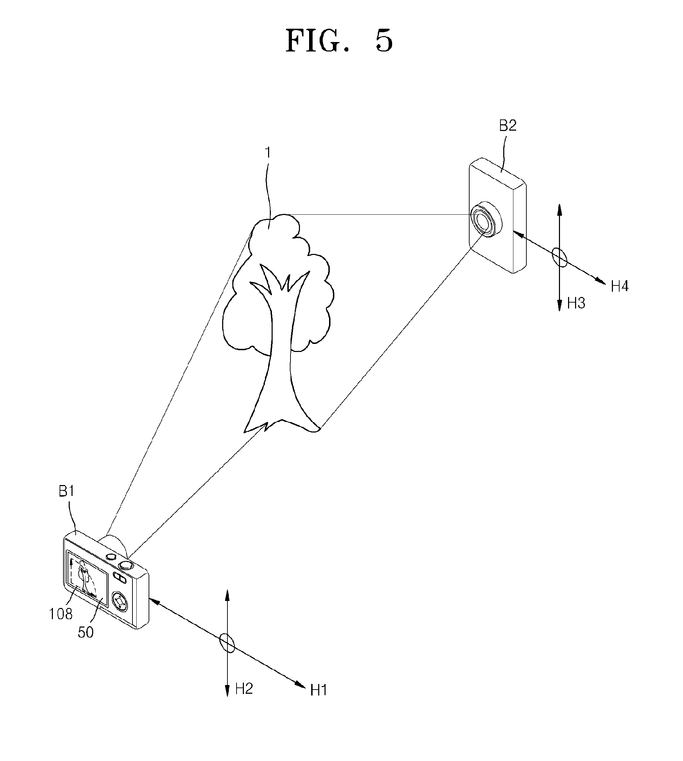

FIG. 5 is a perspective view for explaining a photographing operation of the imaging apparatus of FIG. 1.

When the imaging apparatus constructed as described above is used, an imaging operation may be performed based on a posture of the main body 101 of the imaging apparatus by using a signal sensed by the posture sensor 60.

For example, a subject 1 is a tree in FIG. 5. When the subject 1 is photographed in a state where a posture of a photographing apparatus B1 is adjusted to be in a direction H1 perpendicular to a gravity direction H2, it may be determined from a detection signal of the posture sensor 60 that the posture of the imaging device B1 is in the direction H1 perpendicular to the gravity direction H2.

When the subject 1 is photographed in a state where an imaging device B2 is rotated to match a gravity direction H3, it may be determined from a detection signal of the posture sensor 60 that the posture of the imaging device B2 is in a direction H4 perpendicular to the gravity direction H3.

As such, since information about postures of the imaging devices B1 and B2 relative to a gravity direction may be obtained from a detection signal of the posture sensor 60, the information about the postures of the imaging devices B1 and B2 relative to the gravity direction may be written along with the image data.

Also, when a leveller 108 is displayed on the display unit 50 by using the information about the posture of the imaging device B1 obtained from the posture sensor 60, the user may conveniently photograph the subject 1.

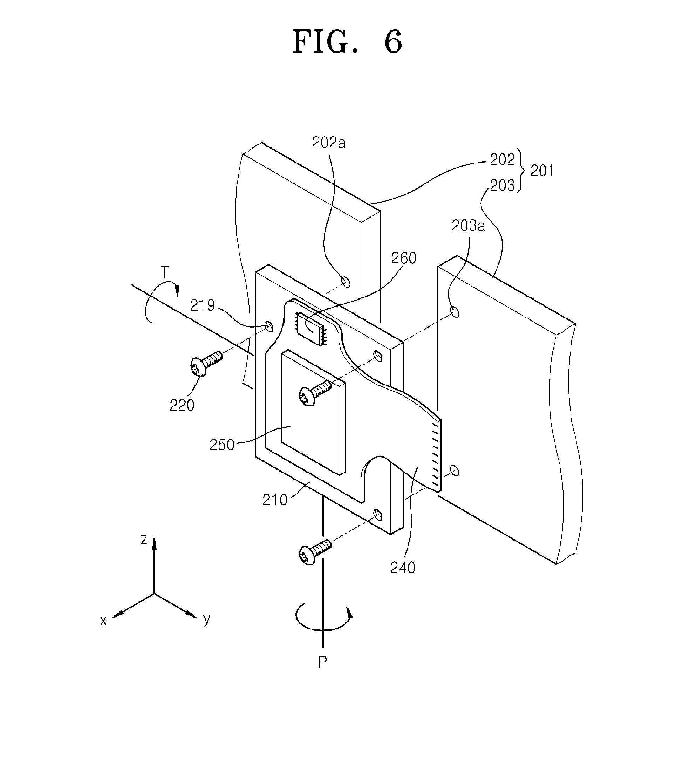

FIG. 6 is a partial exploded perspective view illustrating an imaging apparatus, according to another embodiment.

Referring to FIG. 6, the imaging apparatus includes an imaging device 250, a support plate 210 that supports the imaging device 250, a main body 201 that supports the support plate 210 to adjust a position of the support plate 210, and a posture sensor 260 that is disposed on the support plate 210 and senses a change in a posture of the main body 201.

The support plate 210 that supports the imaging device 250 is disposed such that a position of the support plate 210 relative to chassis 202 and 203 of the main body 201 may be adjusted. That is, a position of the support plate 210 relative to the main body 201 may be adjusted when elements of the imaging apparatus are assembled.

Position adjusting units 220 that adjust a position of the support plate 210 relative to the main body 201 are provided between the support plate 210 and the main body 201. The position adjusting units 220 are inserted into a plurality of coupling holes 219 formed in the support plate 210.

Since screw surfaces corresponding to the position adjusting units 220 are formed on inner walls of the coupling holes 219 of the support plate 210, the position adjusting units 220 may be screwed into the coupling holes 219 of the support plate 210. As an operator rotates the position adjusting units 220 during an assembling process, lengths of portions of the position adjusting units 220 passing through the coupling holes 219 and protruding from the support plate 210 may be adjusted.

The support plate 210 is supported by the chassis 202 and 203 of the main body 201. End portions of the position adjusting units 220 passing through the coupling holes 219 of the support plate 210 are supported by support grooves 202a and 203a of the chassis 202 and 203.

Three position adjusting units 220 are provided. As the three position adjusting units 220 rotate, positions of portions of the support 210 corresponding to the position adjusting units 220 which are spaced apart from the chassis 202 and 203 may be changed. Accordingly, by combining adjusted positions of the three position adjusting units 220, the support plate 210 may be rotated in a panning direction (a P-axis direction), the support plate 210 may be rotated in a tilting direction (a T-axis direction), or a position in an X-axis direction may be adjusted.

The number or positions of the position adjusting units 220 are not limited thereto, and a various number of, for example, 4, 5, or 6, position adjusting units 220 may be provided.

The imaging device 250 and the posture sensor 260 are electrically coupled to a flexible circuit board 240. Accordingly, the imaging device 250 and the posture sensor 260 may be coupled to the support plate 210 by using the flexible circuit board 240. Since the flexible circuit board 240 on which the imaging device 250 and the posture sensor 260 are disposed is coupled to the support plate 210, positions of the imaging device 250 and the posture sensor 260 relative to the main body 204 may be precisely adjusted by adjusting a position of the support plate 210.

Since the posture sensor 260 as well as the imaging device 250 is disposed on the support plate 210, a position of the posture sensor 260 relative to the main body 201 may be adjusted by performing a process of adjusting a position of the imaging device 250 relative to the main body 201. Since the imaging device 250 is adjusted such that the amount of the imaging device 250 tilted with respect to the main body 201 is about 10 µm, the posture sensor 260 may be precisely adjusted relative to the main body 201.

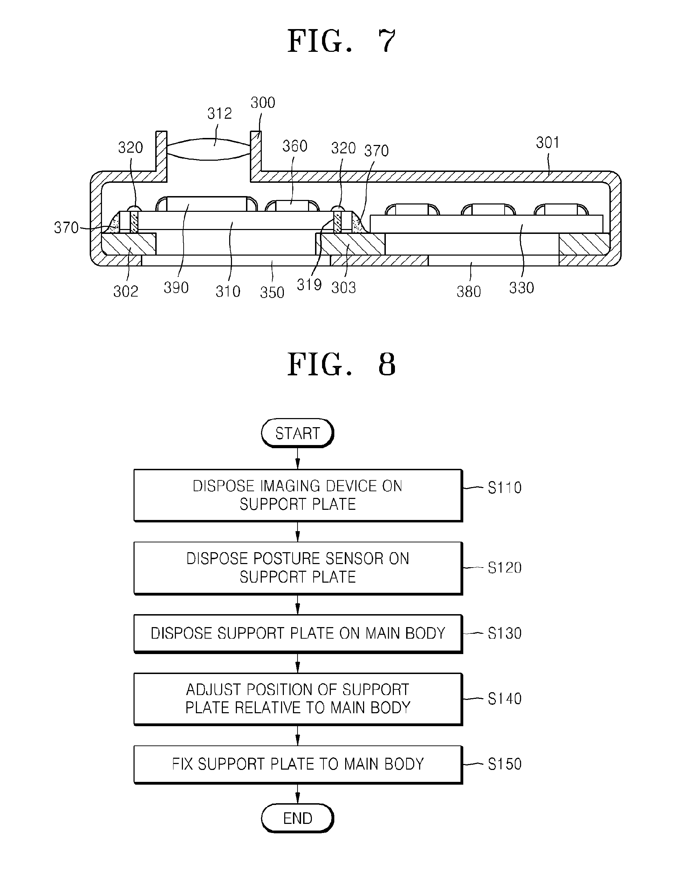

FIG. 7 is a cross-sectional view illustrating an imaging apparatus, according to another embodiment.

Referring to FIG. 7, the imaging apparatus includes an imaging device 390, a support plate 310 that supports the imaging device 390, a main body 301 that supports the support plate 310 to adjust a position of the support plate 310, and a posture sensor 360 that is disposed on the support plate 310 and senses a change in a posture of the main body 301.

The support plate 310 that supports the imaging device 390 is disposed such that a position of the support plate 310 relative to chassis 302 and 303 of the main body 301 may be adjusted. That is, when elements of the imaging apparatus are assembled, a position of the support plate 310 relative to the main body 301 may be adjusted.

Position adjusting units 320 that adjust a position of the support plate 310 relative to the main body 301 are provided between the support plate 310 and the main body 301. The position adjusting units 320 are inserted into a plurality of coupling holes 319 formed in the support plate 310.

Since screw surfaces corresponding to the position adjusting units 320 are formed on inner walls of the coupling holes 319 of the support plate 310, the position adjusting units 320 may be screwed into the coupling holes 319 of the support plate 310. As an operator rotates the position adjusting units 320 during an assembling process, lengths of portions of the position adjusting units 320 passing through the coupling holes 319 and protruding from the support plate 310 may be adjusted.

The support plate 310 is supported by the chassis 302 and 303 of the main body 301. End portions of the position adjusting units 320 passing through the coupling holes 319 of the support plate 310 are supported by the chassis 302 and 303.

When a process of adjusting a position of the support plate 310 relative to the main body 301 is completed, the support plate 310 may be fixed to the chassis 302 and 303 of the main body 301 by using an adhesive 370. The adhesive 370 may be, for example, an ultraviolet curable resin or a thermosetting resin.

A barrel 300 including lenses 312 is provided on a front portion of the main body 301 corresponding to the imaging device 390. A display unit 350 and a user input unit 380 are provided on a rear portion of the main body 301.

A main circuit board 330 is disposed beside the support plate 310 in the main body 301. The main circuit board 330 transmits or receives a signal to or from elements such as the display unit 350, the user input unit 380, the imaging device 390, and the posture sensor 360, and controls other elements.

If the posture sensor 360 is disposed on the main circuit board 330 like in a conventional method, a process of adjusting a position of the posture sensor 360 relative to the main body 301 needs to be additionally performed. However, in the present embodiment, since the posture sensor 360 and the imaging device 390 are disposed on the support plate 310, a process of adjusting a position of the posture sensor 360 relative to the main body 301 may also be completed by performing a process of adjusting a position of the imaging device 390.

FIG. 8 is a flowchart illustrating a method of manufacturing an imaging apparatus, according to an embodiment.

Referring to FIG. 8, the method includes operation S110 in which an imaging device is disposed on a support plate, operation S120 in which a posture sensor is disposed on the support plate, operation S130 in which the support plate is disposed on a main body, operation S140 in which a position of the support plate relative to the main body is adjusted, and operation S150 in which the support plate is fixed to the main body.

Although operation S110 in which the imaging device is disposed on the support plate and operation S120 in which the posture sensor is disposed on the support plate are performed sequentially, the present embodiment is not limited thereto, and operation S110 and operation S120 may be simultaneously performed or operation S120 may be performed first and operation S110 may be performed afterwards.

After the imaging device and the posture sensor are disposed on the support plate, operation S130 in which the support plate is disposed on the main body is performed. Since operation S130 in which the support plate is disposed on the main body is an operation in which the support plate is temporarily disposed on the main body, the support plate is disposed such that a position of the support plate relative to the main body may be adjusted.

In operation S140 in which the position of the support plate relative to the main body is adjusted, a position of the support plate relative to the main body is adjusted to precisely adjust a position of the imaging device relative to an optical axis. The support plate may be precisely adjusted such that the amount of the support plate tilted with respect to the optical axis of the imaging device is about 10 µm. In operation S140 in which the position of the support plate is adjusted, a position of the posture sensor may be completely adjusted simultaneously with the position of the imaging device is adjusted.

Since a positioning precision of the imaging device is higher than a positioning precision of the posture sensor, if the posture sensor is coupled to the support plate within an allowable error range, a process of adjusting a position of the posture sensor may be automatically completed by performing a process of adjusting a position of the imaging device. Since the posture sensor is coupled to a predetermined position on the support plate, the posture sensor may be coupled to the support plate within the allowable error range of the posture sensor.

After operation S140 in which the position of the support plate is adjusted, operation S150 in which the support plate is fixed to the main body is performed. In operation S150 in which the support plate is fixed to the main body, the support plate is fixed to the main body by using an adhesive such as a thermosetting resin or an ultraviolet resin or a fixing member such as bolts and nuts, or rivets.

According to a conventional method of assembling an imaging apparatus, a posture sensor is not disposed on a substrate that supports an imaging device, but is disposed on a main circuit board that is separately provided from the imaging device. Accordingly, after a process of adjusting a position of the imaging device relative to an optical axis is performed, a process of adjusting a position of the posture sensor relative to a main body of the imaging apparatus has to be performed. Accordingly, it is difficult and time consuming to assemble the elements of the imaging apparatus.

According to the method of manufacturing an imaging apparatus of FIG. 8, since processes of adjusting positions of an imaging device and a posture sensor are simultaneously completed by performing a simple process of adjusting a position of a support plate on which the imaging device and the posture sensor are disposed relative to a main body, the imaging apparatus may be easily manufactured and a time taken to assemble elements of the imaging apparatus may be reduced.

As described above, according to an imaging apparatus and a method of manufacturing the same of the one or more embodiments of the invention, since processes of adjusting positions of an imaging device and a posture sensor may be simultaneously completed by performing a simple process of adjusting a position of a support plate on which the imaging device and the posture sensor are disposed relative to the main body, the imaging apparatus may be easily manufactured and a time taken to assemble the imaging apparatus may be reduced.

The device described herein may comprise a processor, a memory for storing program data and executing it, a permanent storage such as a disk drive, a communication port for handling communications with external devices, and user interface devices, etc. Any processes may be implemented as software modules or algorithms, and may be stored as program instructions or computer readable codes executable by a processor on a computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media can be read by the computer, stored in the memory, and executed by the processor.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the exemplary embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical". The word "comprise" or variations such as "comprises" or "comprising" is understood to mean "includes, but is not limited to" such that other elements that are not explicitly mentioned may also be included.

The use of the terms "a" and "an" and "the" and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention.

## Claims

1. An imaging apparatus comprising:
an imaging device:
a support plate that supports the imaging device;
a main body that supports the support plate to adjust a position of the support plate; and
a posture sensor that is disposed on the support plate and senses a change in a posture of the main body.

2. The imaging apparatus of claim 1, further comprising position adjusting units that adjust the position of the support plate relative to the main body.

3. The imaging apparatus of claim 2, wherein the position adjusting units comprise a plurality of adjusting screws that are respectively inserted into a plurality of coupling holes formed in the support plate,
wherein lengths of portions of the plurality of adjusting screws passing through the plurality of coupling holes and protruding from the support plate are adjusted.

4. The imaging apparatus of claim 3, wherein end portions of the plurality of adjusting screws protruding from the support plate are supported by the main body.

5. The imaging apparatus of claim 3, further comprising a main circuit board that is mounted on the main body,
wherein end portions of the plurality of adjusting screws protruding from the support plate are supported by the main circuit board.

6. The imaging apparatus of claim 1, wherein the position of the support plate relative to the main body is adjusted by rotating the support plate relative to the main body plate in a first direction, rotating the support plate relative to the main body in a second direction that intersects the first direction, or moving the support plate toward or away from the main body.

7. The imaging apparatus of claim 1, wherein the support plate comprises an electrical circuit pattern that is electrically connected to the imaging device and the posture sensor.

8. The imaging apparatus of claim 7, further comprising a main circuit board that is mounted on the main body and is electrically connected to the support plate.

9. The imaging apparatus of claim 8, wherein the main circuit board is disposed to face a surface of the support plate opposite to a surface of the support plate on which the imaging device is disposed.

10. The imaging apparatus of claim 8, wherein the main circuit board is disposed to be spaced apart from a side surface of the support plate.

11. The imaging apparatus of claim 1, further comprising a flexible circuit board that is electrically connected to the imaging device and the posture sensor,
wherein the imaging device and the posture sensor are coupled to the support plate by using the flexible circuit board.

12. A method of manufacturing an imaging apparatus, the method comprising:
disposing an imaging device on a support plate;
disposing a posture sensor on the support plate;
disposing the support plate on a main body; and
adjusting a position of the support plate relative to the main body.

13. The method of claim 12, further comprising, after the adjusting of the position of the support plate relative to the main body, fixing the support plate to the main body.

14. The method of claim 13, further comprising, after the fixing of the support plate to the main body, obtaining a signal about a reference surface from the posture sensor and compensating for a positional difference between the posture sensor and the imaging device.

15. The method of claim 12, wherein the adjusting of the position of the support plate relative to the main body comprises adjusting the position of the support plate by rotating the support plate relative to the main body in a first direction, rotating the support plate relative to the main body in a second direction that intersects the first direction, or moving the support plate toward or away from the main body.
